# EUROPEAN PATENT SPECIFICATION

(11) **EP 1 220 747 B1**
(45) Date of publication and mention of the grant of the patent: **24.08.2005**
(21) Application number: 00950061.2
(22) Date of filing: 10.08.2000
(51) Int. Cl.: B29C 65/08, B29C 53/52

(54) **ULTRASONIC SEALING DEVICE FOR PACKAGING MATERIAL**
ULTRASCHALLSCHWEISSVORRICHTUNG FÜR VERPACKUNGSMATERIAL
DISPOSITIF DE SCELLEMENT A ULTRASON DESTINE AUX MATIERES D'EMBALLAGE

(43) Date of publication of application: 10.07.2002
(60) Divisional application: 05005447.7
(73) Proprietor: Furukawa Mfg. Co., Ltd., Tokyo 140-0014 (JP)
(72) Inventor: UNEDA, Noriaki, Mihara-shi, Hiroshima 723-0052 (JP)
(74) Representative: Engelhardt, Harald
(86) International application number: PCT/JP2000/005382
(87) International publication number: WO 2002/014054

(56) References cited:
- FR-A- 2 313 186
- FR-A- 2 571 639
- US-A- 4 410 383
- US-A- 4 950 345

## Description

### Technical Field

The present invention relates to a device not only for rounding a belt-like film into a tube along its length direction, but for melding overlapped edges on both sides of said tubular film by ultrasonic vibration in order to form a plurality of packaging bags.

### Background Art

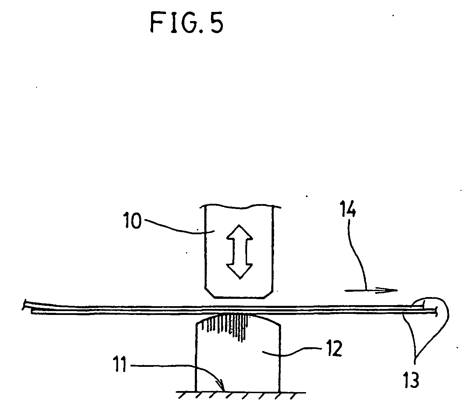

In the conventional device which effects melding of overlapped parts of both side edges of a film rounded to be tubular by heat generated by ultrasonic vibration, as shown in Fig. 5, two overlapping sheets of film 13 are moved in the direction of arrow 14 between a vertically vibrating hammer 10 and an anvil 12 securely held on the frame 11, thereby to continuously meld the film 13 by vibration heat induced by the hammer. However, because of subtle variations in the thickness of the aforementioned film 13, its melding strength varies from area to area, threatening to cause air leak when vacuum packaging is carried out, for example.

### Disclosure of Invention

It is therefore an object of this invention to form a tubular film having a uniform strength by averaging the vibratory impact force to be applied onto the film.

An apparatus to apply vibrations to thermo fusible sheet articles is known form FR 2 313 186 A. This apparatus contains an anvil that is resiliently supported in a seating by a spring or other resilient means. The spring may be fitted in a recess which is formed in the body of the anvil. In order to ensure a better bearing action, a ball is positioned between the spring and the bottom of the seating. To regulate the height of the anvil, the pressure of the spring can be adjusted by a screw or any other suitable means. The anvil is thus resiliently urged in a direction out of its seating and towards the hammer of the apparatus and a sharp abutment of the anvil presses against the hammer.

A device known from FR 2 571 639 A provides a plurality of small anvils that are in contact with spring means, whereby a plate is placed between each anvil and the corresponding spring means. These spring means, which can also be adjusted, push the anvils against the hammer.

According to US 4 950 345 A a back-up pad is provided over an anvil surface of a back-up plate, and between the anvil surface and a sealing surface of a sealing die, in an apparatus for forming seals between layers of film material. The back-up pad has a slip surface on one side thereof and a spring surface on an opposite side thereof, the slip surface opposing the sealing face of the die so that the layers of film material pass between the sealing die and the back-up pad during seal formation. The spring surface is comprised of a plurality of outwardly extending resilient spring loops that act against the back-up plate during seal formation, the spring loops resiliently urging the layers of film material against the sealing face to effect seal formation between the film layers while cushioning the film layers to prevent damage to the film layers due to drag between layers and the die face.

Another apparatus for manufacturing tubular shaped thermoplastic members using ultrasonic welding is known from US 4 410 383 A. This apparatus also contains resiliently mounted anvil members.

The present invention provides a sealing device comprising a means for moving a belt-like film along a tubular plate having both side edges thereof folded to overlap one upon another as if at a kimono's neck part, thereby to form the film into a continuous tube, following the sectional profile of this tubular plate, wherein an anvil is formed on one end of a spring piece, the other end of which is fixedly set on one side edge of the aforementioned overlapped part of the tubular plate, the overlapped portion of the tubular film may be melded by the cooperation of the aforementioned anvil and a movable hammer which applies an ultrasonic vibratory impact on said anvil.

### Brief Description of Drawings

Fig. 1 is a bottom view of a sealing device according to an embodiment of the invention;
Fig. 2 is a perspective view of the device;
Fig. 3 is a sectional view of the device along the line III-III in Fig. 2;
Fig. 4 is a sectional view of the device taken along the line IV-IV in Fig. 2;
Fig. 5 is an explanatory diagram showing a prior art.

### Best Mode for Carrying Out the Invention

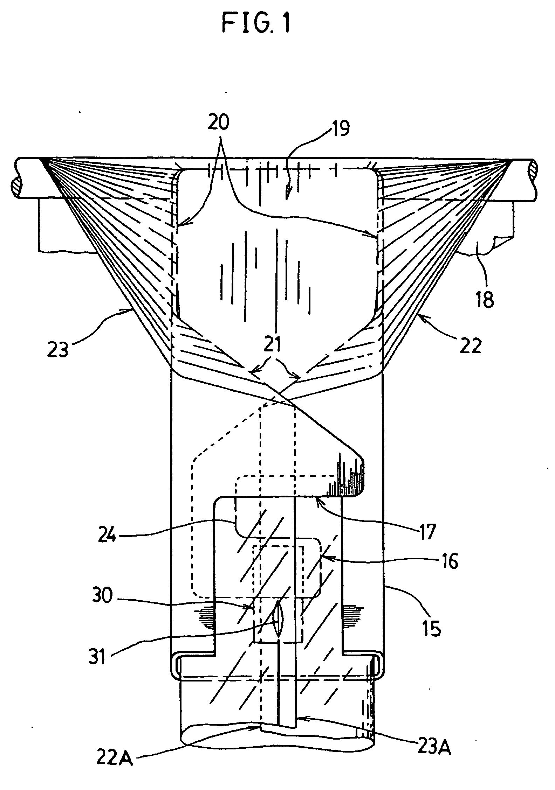

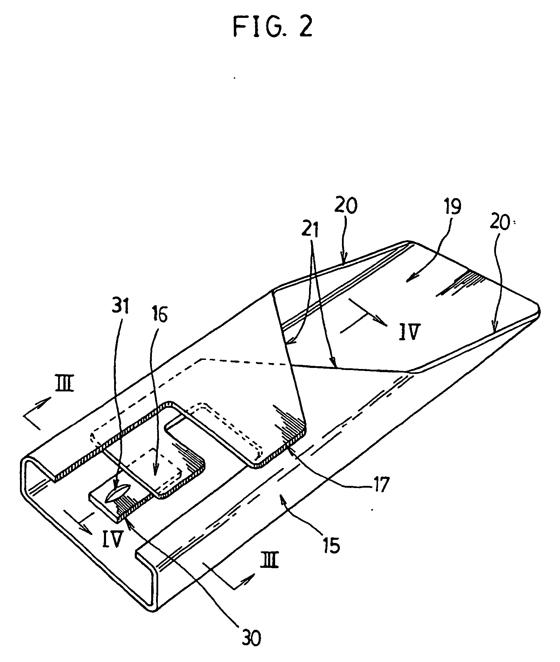

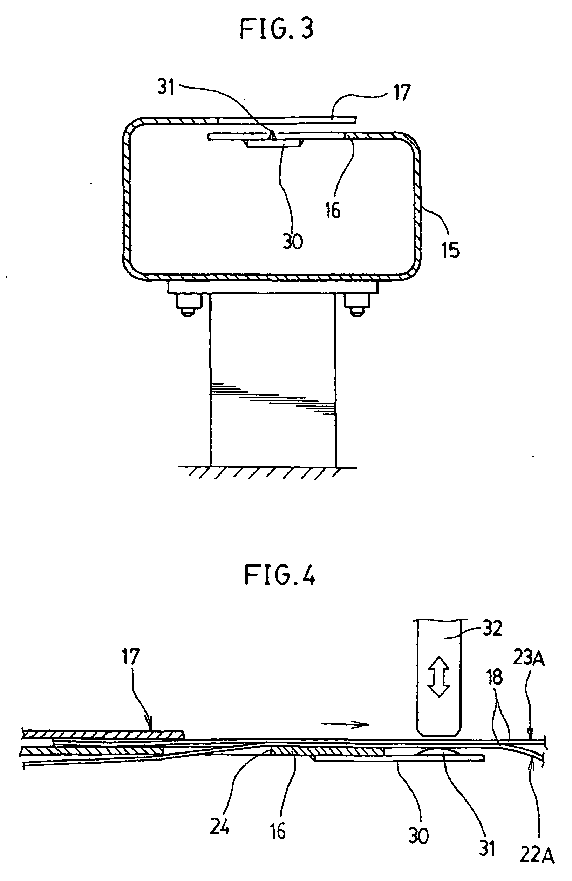

As shown in Fig. 1 and Fig. 2 which is a perspective view of Fig. 1, a plate 15 tubularly folded to be rectangular in section is not only overlapped at two side edges 16 and 17 thereof with one upon the other as if at a kimono's neck part, but has inclined edges 20 and a V-shape edge 21 provided at the entrance 19 for a belt-like film 18 in order to reduce resistance accompanying said film's access thereto. With this arrangement, one side edge 22 of the film 18 which is drawn out along said tubular plate 15 passes under the inner side edge 16, and the other side edge 23 passes under the outer edge 17. However, in this instance, as a part of the inner edge 16 is stealthily notched as at 24, the one side edge 22 of the film is led out upward through this stealthily notched part 24. As a result, two side edges 22A and 23A are overlapped as if at a kimono's neck part at a position where they come out from the aforementioned stealthily notched part (see also Fig. 4).

Further, one end of an elongated rectangular spring piece 30 is securely held on the inner surface of the central portion of the inner side edge 16 of the aforementioned tubular plate, while a grain-of-rice shape anvil 31 is bulged out from the other free end of said spring piece and an ultrasonic hammer 32 is located face to face with said anvil 31, as shown in Fig. 4. When ultrasonic vibration of the aforementioned hammer 32 is acted upon the anvil 31 through the film, the film melds to form a tubular shape due to heat produced by this vibration. In this instance, the aforementioned spring piece 30 is flexible, so that even if the film 18's thickness is more or less uneven, vibratory impact is uniformly applied on the film owing to the flexibility of the spring piece, thereby equalizing the meld strength.

According to the description of the embodiment represented by Figs. 1 through 4, the belt-like film 18 is formed into a tube by drawing it downward from the tubular plate 15, however it is also possible to turn round a tubular film for 180 degrees and lead the film downward from above.

Further, the spring piece may be made by using other materials than those specified exclusively for springs, as far as the used material has such an elasticity that the spring piece would not be deformed by the vibration amplitude of the hammer, because the amplitude is very small.

## Claims

1. A sealing device comprising a means for moving a belt-like film (18) along a tubular plate (15) having both side edges (16, 17) thereof folded to overlap one upon another as if at a kimono's neck part, thereby to form the film (18) into a continuous tube, following the sectional profile of the tubular plate (15),
**characterized in that**
an anvil (31) is formed on one end of a spring piece (30), the other end of which is fixedly set on one side edge (16) of the aforementioned overlapped part of the tubular plate (15), so that the overlapped portion of the tubular film (18) may be melded by the cooperation of the anvil (31) and a movable hammer (32) which applies ultrasonic vibratory impact on the anvil (31).

## Patentansprüche

1. Schweißvorrichtung mit einer Einrichtung zum Bewegen einer bandförmigen Folie (18) entlang eines röhrenförmigen Bleches (15) dessen beide Seitenränder (16,17) so gefalzt sind, dass ähnlich dem Nackenteil eines Kimonos einer den anderen überlappt damit die Folie (18) dem Querschnitt des röhrenförmigen Bleches (15) folgend zu einer durchgehende Röhre geformt wird, **dadurch gekennzeichnet, dass** an einem Ende eines Federteilos (30) ein Amboss (31) ausgebildet ist, und dass das andere Ende desselben fest an einem Seitenrand (16) des erwähnten überlappenden Teils des röhrenförmigen Bleches (15) angeordnet ist, so dass der überlappende Abschnitt der röhrenförmigen Folie (18) durch das Zusammenwirken des Ambosses (31) und eines beweglichen Hammers (32), welcher Stöße durch Ultraschallschwingungen auf den Amboss (31) ausübt, verschweißt werden kann.

## Revendications

1. Dispositif de scellement comprenant un moyen pour déplacer un film en forme de bande (18) le long d'une plaque tubulaire (15) dont les deux bords (16, 17) latéraux de celle-ci sont pliés pour se chevaucher l'un l'autre comme pour une partie de col de kimono, pour ainsi former le film (18) en un tube continu, suivant le profil sectionnel de la plaque tubulaire (15), **caractérisé en ce qu'**une enclume (31) est formée à une extrémité d'une pièce élastique (30), l'autre extrémité de celle-ci étant fixée à un bord latéral (16) de la partie chevauchée mentionnée plus haut de la plaque tubulaire (15), de sorte que la partie chevauchée de la feuille tubulaire (18) peut être fondue par la coopération de l'enclume (31) et d'un marteau mobile (32) qui applique un impact vibratoire à ultrasons sur l'enclume (31).
